# EUROPÄISCHE PATENTSCHRIFT

(11) **EP 4 127 771 B1**
(45) Veröffentlichungstag und Bekanntmachung des Hinweises auf die Patenterteilung: **18.02.2026**
(21) Anmeldenummer: 21727119.6
(22) Anmeldetag: 18.05.2021
(51) Int. Cl.: G01S 11/16, G01S 5/02

(54) **VERFAHREN ZUR ABSTANDSBESTIMMUNG**
METHOD FOR DISTANCE DETERMINATION
PROCÉDÉ DE DÉTERMINATION DE DISTANCE

(30) Priorität: 20.05.2020 DE 102020206330
(43) Veröffentlichungstag der Anmeldung: 08.02.2023
(73) Patentinhaber: Micro-Sensys GmbH, 99098 Erfurt (DE)
(72) Erfinder: JURISCH, Reinhard, 99438 Meckfeld bei Bad Berka (DE); JÄGER, Sylvo, 99098 Erfurt (DE); PEITSCH, Peter, 99099 Erfurt (DE)
(74) Vertreter: Liedtke & Partner Patentanwälte
(86) Internationale Anmeldenummer: PCT/EP2021/063129
(87) Internationale Veröffentlichungsnummer: WO 2021/233910

(56) Entgegenhaltungen:
- WO-A1-2009/112901
- DE-A1- 10 333 012
- DE-A1- 102017 131 117
- DE-A1- 102017 216 578
- US-A1- 2007 205 886

## Beschreibung

Die Erfindung betrifft ein Verfahren zur Abstandsbestimmung.

Aus dem Stand der Technik sind eine Vielzahl verschiedener Abstandsbestimmungseinheiten sowie Vorrichtungen und Verfahren zur Abstandsbestimmung allgemein bekannt.

In der WO 2009/112901 A1 werden drahtlose Kommunikationsgeräte und Verfahren beschrieben, die eine mit HF-Kommunikationssignalen synchronisierte akustische Entfernungsbestimmung verwenden. Ein Kommunikationsendgerät umfasst einen HF-Transceiver, ein Mikrofon und eine Steuerung. Die Steuerung synchronisiert eine Uhr als Reaktion auf bekannte Zeitcharakteristiken von empfangenen HF-Kommunikationssignalen, bestimmt eine Erzeugungszeit relativ zu der mit dem HF-Kommunikationssignal synchronisierten Uhr, zu der das andere Kommunikationsendgerät ein akustisches Signal erzeugen wird, bestimmt eine Empfangszeit des akustischen Signals relativ zu der mit dem HF-Signal synchronisierten Uhr, wenn das akustische Signal von dem anderen Kommunikationsendgerät in dem Mikrofonsignal erfasst wird, bestimmt ferner eine Ausbreitungszeit des akustischen Signals von dem anderen Kommunikationsendgerät zu dem Mikrofon basierend auf einer Differenz zwischen der Erzeugungszeit und der Empfangszeit und bestimmt eine Entfernung zu dem anderen Kommunikationsendgerät als Reaktion auf die Ausbreitungszeit des akustischen Signals.

Aus der DE 10 2017 131 117 A1 ist ein drahtloses, elektronisches Lokalisierungssystem bekannt. Bei dem Lokalisierungssystem zur drahtlosen, elektronischen Abstandsbestimmung zwischen einer ersten Kommunikationseinheit und einer mit der ersten Kommunikationseinheit eine Funkstrecke ausbildenden zweiten Kommunikationseinheit ist die erste Kommunikationseinheit tragbar ausgebildet. Das Lokalisierungssystem umfasst Laufzeiterfassungsmittel zur drahtlosen Abstandsbestimmung zwischen der ersten Kommunikationseinheit und der zweiten Kommunikationseinheit. Zur Realisierung der Laufzeiterfassungsmittel weist die zweite Kommunikationseinheit eine Schallquelle zum Erzeugen eines hörbaren Akustiksignals oder Ultraschall-Akustiksignals als Reaktion auf ein von der ersten Kommunikationseinheit empfangenes erstes Funksignal auf, und die erste Kommunikationseinheit weist ein Mikrofon zum Empfangen des mit der zweiten Kommunikationseinheit erzeugten Akustiksignals auf. Es sind Schalllaufzeitmittel vorgesehen, die aus einer aus dem Erzeugen und dem Empfangen des Akustiksignals bestimmten Schalllaufzeit ein Abstandssignal erzeugen. Die zweite Kommunikationseinheit ist derart ausgebildet, dass das Erzeugen des Akustiksignals durch das empfangene erste Funksignal ausgelöst wird.

In der DE 103 33 012 A1 werden ein Ultraschalltriangulationssystem und ein Verfahren hierzu beschrieben. Das Ultraschalltriangulationssystem umfasst einen Ultraschallsender, ortsfeste Ultraschallempfänger und eine Ultraschall-Auswerteeinheit, welche aus den empfangenen elektrischen Signalen, welche von den Ultraschallempfängern nach Empfang des Ultraschallsignals des Ultraschallsenders abgegeben werden, die Laufzeiten des Ultraschallsignals des Ultraschallsenders zu ermitteln imstande ist. Ein Steuerungsrechner koordiniert und steuert das Ultraschalltriangulationssystem. Der Ultraschallsender ist batteriegestützt und arbeitet mobil kabellos. Das notwendige auf den Ultraschallsender aufzugebende Triggersignal, welches sowohl zur Markierung des Beginns der Zeitmessung in der Ultraschall-Auswerteeinheit als auch zur Veranlassung des mobilen Ultraschallsenders zum Senden eines Ultraschallsignals dient, ist mittels einer Einrichtung zur drahtlosen Signalübertragung zum Ultraschallsender übermittelbar.

Der Erfindung liegt die Aufgabe zu Grunde, ein gegenüber dem Stand der Technik verbessertes Verfahren zur Abstandsbestimmung anzugeben.

Die Aufgabe wird erfindungsgemäß gelöst durch ein Verfahren zur Abstandsbestimmung mit den Merkmalen des Anspruchs 1.

Vorteilhafte Ausgestaltungen der Erfindung sind Gegenstand der Unteransprüche.

Eine Abstandsbestimmungseinheit umfasst eine Ultraschallsendeeinheit, ausgebildet und eingerichtet zum Senden vorgegebener Ultraschallsignale, eine Ultraschallempfangseinheit, ausgebildet und eingerichtet zum Empfangen von Ultraschallsignalen weiterer Abstandsbestimmungseinheiten, eine Funksendeeinheit, ausgebildet und eingerichtet zum Senden vorgegebener Funksignale, eine Funkempfangseinheit, ausgebildet und eingerichtet zum Empfangen von Funksignalen weiterer Abstandsbestimmungseinheiten, einen Mikrocontroller, ausgebildet und eingerichtet zur Ermittlung eines Abstands zu einer weiteren Abstandsbestimmungseinheit anhand mindestens eines von dieser weiteren Abstandsbestimmungseinheit empfangenen Abstandsbestimmungsultraschallsignals und mindestens eines von dieser weiteren Abstandsbestimmungseinheit empfangenen Funksignals, und eine elektrische Energiequelle, welche insbesondere als Batterie oder Akkumulator ausgebildet ist. Des Weiteren umfasst die Abstandsbestimmungseinheit eine Speichereinheit, ausgebildet und eingerichtet zur Speicherung einer, insbesondere eindeutigen, Identifikation der weiteren Abstandsbestimmungseinheit, welche insbesondere in dem Funksignal von der weiteren Abstandsbestimmungseinheit an die Abstandsbestimmungseinheit übermittelt wird, und des ermittelten Abstands der weiteren Abstandsbestimmungseinheit, und/oder eine Ausgabeeinheit, ausgebildet und eingerichtet zur Ausgabe des ermittelten Abstands und/oder eines mit dem ermittelten Abstand korrespondierenden Ausgabesignals und/oder der eindeutigen Identifikation der weiteren Abstandsbestimmungseinheit. Die Ausgabeeinheit umfasst beispielsweise mehrere, insbesondere verschiedenfarbige, Lichtquellen, insbesondere jeweils ausgebildet als eine LED. Je nach ermitteltem Abstand kann dann beispielsweise vorgesehen sein, dass eine jeweilige dem jeweiligen Abstand oder Abstandsbereich zugeordnete Lichtquelle aufleuchtet, beispielsweise bei einem Abstand von weniger als einem Meter eine rote Lichtquelle, bei einem Abstand zwischen einem Meter und zwei Metern eine gelbe Lichtquelle, bei einem Abstand zwischen zwei Metern und drei Metern eine grüne Lichtquelle und bei einem größeren Abstand keine der Lichtquellen. Alternativ oder zusätzlich kann die Ausgabeeinheit beispielsweise eine Tonausgabe zur Ausgabe eines Warntons umfassen, insbesondere bei Unterschreitung eines vorgegebenen Mindestabstands von beispielsweise einem Meter, und/oder beispielsweise zur Ausgabe einer Sprachinformation. Alternativ oder zusätzlich kann die Ausgabeeinheit beispielsweise eine Vibrationseinheit, insbesondere in Form eines Vibrationsmotors, zur Ausgabe eines Vibrationsalarms umfassen, insbesondere bei Unterschreitung eines vorgegebenen Mindestabstands von beispielsweise einem Meter. Die Ultraschallsendeeinheit und die Ultraschallempfangseinheit sind beispielsweise als eine gemeinsame Ultraschalleinheit ausgebildet. Die Funksendeeinheit und die Funkempfangseinheit sind beispielsweise als eine gemeinsame Funkeinheit ausgebildet. Als Funktechnologie wird beispielsweise Bluetooth, BLE (Bluetooth Low Energy) oder ZigBee verwendet.

Eine Vorrichtung zur Abstandsbestimmung umfasst mindestens zwei Abstandsbestimmungseinheiten. Dabei können die Abstandsbestimmungseinheiten der Vorrichtung gleich oder unterschiedlich ausgebildet sein, insbesondere jeweils eines oder mehrere der nachfolgend geschilderten weiteren Merkmale aufweisen. In einem erfindungsgemäßen Verfahren zur Abstandsbestimmung mittels einer solchen Vorrichtung empfängt eine Abstandsbestimmungseinheit von mindestens einer weiteren Abstandsbestimmungseinheit ein Abstandsbestimmungsultraschallsignal und ein Funksignal und ermittelt daraus einen Abstand zu dieser weiteren Abstandsbestimmungseinheit. Das Funksignal enthält besonders bevorzugt die eindeutige Identifikation der weiteren Abstandsbestimmungseinheit. Somit wird vorteilhafterweise die eindeutige Identifikation der weiteren Abstandsbestimmungseinheit mittels des Funksignals von der weiteren Abstandsbestimmungseinheit an die Abstandsbestimmungseinheit übertragen. Vorteilhafterweise speichert die Abstandsbestimmungseinheit den ermittelten Abstand zusammen mit einer eindeutigen Identifikation der weiteren Abstandsbestimmungseinheit in der Speichereinheit, insbesondere zusammen mit einer Zeitangabe, insbesondere Datum und Uhrzeit, zu welcher die Abstandsbestimmung und/oder die Speicherung erfolgt ist. Alternativ oder zusätzlich gibt die Abstandsbestimmungseinheit vorteilhafterweise den ermittelten Abstand und/oder ein mit dem ermittelten Abstand korrespondierendes Ausgabesignal über die Ausgabeeinheit aus, beispielsweise zusammen mit der eindeutigen Identifikation der weiteren Abstandsbestimmungseinheit.

Die Vorrichtung mit ihren Abstandsbestimmungseinheiten sowie das damit durchzuführende Verfahren ermöglichen eine Abstandsbestimmung zwischen jeweils zwei Abstandsbestimmungseinheiten und dadurch beispielsweise zwischen jeweils zwei Personen, die jeweils eine dieser Abstandsbestimmungseinheiten tragen, beispielsweise an ihrer Kleidung oder an ihrem Körper, insbesondere in ihrem Brustbereich, oder beispielsweise zwischen einer Person und einem Objekt, welche jeweils eine dieser Abstandsbestimmungseinheiten tragen. Zudem ermöglicht die Vorrichtung mit ihren Abstandsbestimmungseinheiten vorteilhafterweise auch eine eindeutige Identifikation der jeweiligen Abstandsbestimmungseinheit und somit vorteilhafterweise auch des Trägers der jeweiligen Abstandsbestimmungseinheit, d. h. der Person oder des Objekts, da vorteilhafterweise die eindeutige Identifikation der das Funksignal und das Abstandsbestimmungsultraschallsignal sendenden weiteren Abstandsbestimmungseinheit als Information in dem Funksignal enthalten ist und somit mittels des Funksignals an die den Abstand bestimmende Abstandsbestimmungseinheit übertragen wird. Diese den Abstand bestimmende Abstandsbestimmungseinheit kann dann dieses Funksignal hinsichtlich der eindeutigen Identifikation der das Funksignal und das Abstandsbestimmungsultraschallsignal sendenden weiteren Abstandsbestimmungseinheit auswerten und den ermittelten Abstand zusammen mit der eindeutigen Identifikation und vorteilhafterweise zusätzlich mit einer Zeitangabe, insbesondere Datum und Uhrzeit, bezüglich der Durchführung der Abstandsbestimmung speichern.

Die Abstandsbestimmungseinheit ist daher vorteilhafterweise als ein so genanntes Tag ausgebildet, erfindungsgemäß als eine Plakette, insbesondere als ein so genanntes Badge, zum Anbringen an Kleidung einer Person, beispielsweise in Form eines Ansteckers oder Namensschildes, oder erfindungsgemäß als ein Aufkleber zum Anbringen an einem Körper einer Person oder als ein Armband, insbesondere zum Anbringen an einem Arm einer Person, oder als eine Einheit zum Anbringen an einem Objekt, beispielsweise an einem Gebäude oder an einem Gegenstand.

Die Funktionsweise der Abstandsbestimmungseinheit und somit der Vorrichtung und des Verfahrens beruht auf der unterschiedlichen Ausbreitungsgeschwindigkeit von Funksignalen und Ultraschallsignalen. Funksignale breiten sich mit Lichtgeschwindigkeit aus, d. h. mit 300.000 Km/s. Ultraschallsignale breiten sich in der Erdatmosphäre in Luft mit der Schallgeschwindigkeit aus, d. h. mit 343 m/s und somit wesentlich langsamer als die Funksignale. Die Abstandsbestimmungseinheit, die Vorrichtung und das Verfahren sind insbesondere zur Abstandsbestimmung auf kurze Distanzen vorgesehen, beispielsweise auf Distanzen von maximal 5 m, insbesondere maximal 2,5 m. Insbesondere auf diese kurzen Distanzen kann für die Funksignale von einer nicht vorhandenen, zumindest nicht messbaren, Verzögerung zwischen deren Senden und deren Empfang ausgegangen werden. Im Gegensatz dazu tritt zwischen dem Senden des jeweiligen Ultraschallsignals durch die weitere Abstandsermittlungseinheit und dessen Empfang durch die empfangende Abstandsermittlungseinheit eine messbare Verzögerung auf, welche abhängig ist vom Abstand zwischen der Abstandsermittlungseinheit und der weiteren Abstandsermittlungseinheit. Diese Verzögerung beträgt beispielsweise mehrere Millisekunden. Insbesondere ist diese Verzögerung proportional zum Abstand zwischen der Abstandsermittlungseinheit und der weiteren Abstandsermittlungseinheit. Daher kann bei gleichzeitigem Senden des Funksignals und des Abstandsbestimmungsultraschallsignals durch die weitere Abstandsbestimmungseinheit oder bei einem Senden des Abstandsbestimmungsultraschallsignals mit einer vorgegebenen und der empfangenden Abstandsbestimmungseinheit bekannten Sendeverzögerung zum Funksignal oder bei einem Senden des Funksignals mit einer vorgegebenen und der empfangenden Abstandsbestimmungseinheit bekannten Sendeverzögerung zum Abstandsbestimmungsultraschallsignal aus der Verzögerung zwischen dem Empfang des Funksignals und dem Empfang des Abstandsultraschallsignals durch die empfangende Abstandsermittlungseinheit der Abstand zwischen dieser Abstandsermittlungseinheit und der weiteren Abstandsermittlungseinheit bestimmt werden.

Das jeweilige Ultraschallsignal ist insbesondere ein so genannter Ultraschallburst, d. h. ein Ultraschallsignalburst oder Ultraschallburstsignal, beispielsweise mit einer Schallfrequenz von 50 kHz, einer Burstlänge, d. h. Signallänge, von beispielsweise 160 µs bei 8 Schwingungen und somit mit einer Wellenpaketlänge von 54,9 mm. Wie bereits erwähnt, bewegt sich dieses Ultraschallsignal mit 343 m/s und somit in 2,9 ms um einen Meter. Beispielsweise ist dieser Wert der Schallgeschwindigkeit als Ausbreitungsgeschwindigkeit des jeweiligen Ultraschallsignals zur Verwendung in dem Verfahren in der jeweiligen Abstandsbestimmungseinheit fest vorgegeben. Alternativ kann er beispielsweise justiert werden, zum Beispiel in Abhängigkeit von der Lufttemperatur, vorteilhafterweise automatisch durch die jeweilige Abstandsbestimmungseinheit, welche hierzu beispielsweise eine entsprechende Sensoreinheit zur Ermittlung der Lufttemperatur aufweist.

Der Abstand zur weiteren Abstandsbestimmungseinheit wird somit vorteilhafterweise anhand der Laufzeit des empfangenen Abstandsbestimmungsultraschallsignals zwischen der sendenden weiteren Abstandsbestimmungseinheit und der empfangenden Abstandsbestimmungseinheit ermittelt. Vorteilhafterweise empfängt somit die Abstandsbestimmungseinheit von mindestens einer weiteren Abstandsbestimmungseinheit ein Abstandsbestimmungsultraschallsignal und ein Funksignal und ermittelt über die Bestimmung und Bewertung der unterschiedlichen Signallaufzeiten den Abstand zu dieser weiteren Abstandsbestimmungseinheit. Die hier beschriebene Abstandsbestimmung beruht somit nicht auf dem bekannten Reflexionsprinzip, bei welcher der Ultraschallsender ein Ultraschall sendet, das an einem Objekt reflektierte Ultraschallsignal wieder empfängt und daraus den Abstand zu diesem Objekt ermittelt, sondern bei der hier beschriebenen Funktionsweise sendet die weitere Abstandsermittlungseinheit das Abstandsbestimmungsultraschallsignal, welches von der anderen Abstandsbestimmungseinheit empfangen wird, und diese andere Abstandsbestimmungseinheit ermittelt aus dem Empfang dieses von der weiteren Abstandsbestimmungseinheit gesendeten originalen Abstandsbestimmungsultraschallsignals den Abstand, d. h. nicht mittels eines reflektierten Ultraschallsignals. Es sind somit für dieses Verfahren zur Abstandsbestimmung stets mindestens zwei Abstandsbestimmungseinheiten erforderlich, nämlich eine Abstandsbestimmungseinheit, hier die weitere Abstandsbestimmungseinheit, welche das Abstandsbestimmungsultraschallsignal sendet, und mindestens eine Abstandsbestimmungseinheit, welche dieses gesendete Abstandsbestimmungsultraschallsignal empfängt und daraus den Abstand zur weiteren Abstandsbestimmungseinheit ermittelt. Es ermittelt somit stets die das Abstandsbestimmungsultraschallsignal empfangende Abstandsbestimmungseinheit den Abstand und nicht, wie bei den bekannten Verfahren, die das Abstandsbestimmungsultraschallsignal sendende weitere Abstandsbestimmungseinheit.

Diese Laufzeit des empfangenen Abstandsbestimmungsultraschallsignals wird beispielsweise anhand eines zeitlichen Abstands zwischen dem Empfang des Abstandsbestimmungsultraschallsignals und dem Empfang des Funksignals ermittelt. Wie bereits erwähnt, wird das von der weiteren Abstandsbestimmungseinheit gesendete Funksignal, insbesondere auf die erwähnten kurzen Distanzen von maximal 5 m, insbesondere maximal 2,5 m, ohne Verzögerung oder zumindest mit einer nicht messbaren und insbesondere vernachlässigbar geringen Verzögerung, von der Abstandsbestimmungseinheit empfangen, während das von der weiteren Abstandsbestimmungseinheit gesendete Abstandsbestimmungsultraschallsignal in Abhängigkeit vom Abstand zwischen der Abstandsbestimmungseinheit und der weiteren Abstandsbestimmungseinheit mit einer messbaren Verzögerung von beispielsweise mehreren Millisekunden empfangen wird. Somit kann aus dem zeitlichen Abstand zwischen dem Empfang des Funksignals und dem Empfang des Ultraschallsignals, wenn diese zeitgleich gesendet wurden, der Abstand zwischen der Abstandsbestimmungseinheit und der weiteren Abstandsbestimmungseinheit ermittelt werden.

Erfindungsgemäß empfängt die Abstandsbestimmungseinheit ein Aktivierungsultraschallsignal von der weiteren Abstandsbestimmungseinheit, aktiviert danach die Funkempfangseinheit und empfängt danach das Abstandsbestimmungsultraschallsignal und das Funksignal. Diese Ausführungsform des Verfahrens ist besonders vorteilhaft bezüglich eines elektrischen Energieverbrauchs. Die Funksendeeinheit und die Funkempfangseinheit weisen einen wesentlich höheren elektrischen Energieverbrauch auf als die Ultraschallsendeeinheit und die Ultraschallempfangseinheit. Mit der hier beschriebenen Ausführungsform des Verfahrens wird es ermöglicht, lediglich die Ultraschallempfangseinheit und die Ultraschallsendeeinheit, also beispielsweise die gemeinsame Ultraschalleinheit, oder beispielsweise lediglich die Ultraschallempfangseinheit ständig zu betreiben und die Funksendeeinheit und Funkempfangseinheit oder die gemeinsame Funkeinheit nur nach Empfang des Aktivierungsultraschallsignals und/oder wenn vorgesehen ist, selbst das Abstandsbestimmungsultraschallsignal und das zugehörige Funksignal zu senden, zu aktivieren und nach Abschluss der Abstandsbestimmung oder nach Abschluss des Sendens des Funksignals wieder zu deaktivieren. Dadurch wird eine erhebliche Energieeinsparung erreicht, wodurch bei einer als Batterie oder Akkumulator ausgebildeten elektrischen Energiequelle bei gleicher Kapazität eine erheblich längere Einsatzdauer der Abstandsermittlungseinheit ermöglicht wird.

Erfindungsgemäß sendet die Abstandsbestimmungseinheit nach Empfang des Aktivierungsultraschallsignals der weiteren Abstandsbestimmungseinheit ein Antwortultraschallsignal und die weitere Abstandsbestimmungseinheit empfängt das Antwortultraschallsignal und sendet daraufhin das Abstandsbestimmungsultraschallsignal und das Funksignal. Dadurch kann der elektrische Energieverbrauch weiter reduziert werden, da auch bei der das Aktivierungsultraschallsignal sendenden weiteren Abstandsbestimmungseinheit die Funksendeeinheit oder die gemeinsame Funkeinheit nur dann aktiviert wird, wenn das Antwortultraschallsignal der dann im Folgenden den Abstand bestimmenden Abstandsbestimmungseinheit empfangen wurde, vorteilhafterweise nur dann, wenn es in einem vorgegebenen Zeitfenster von beispielsweise 10 ms empfangen wurde.

In einer nicht erfindungsgemäßen Ausführungsform werden das Abstandsbestimmungsultraschallsignal und das Funksignal gleichzeitig gesendet oder das Senden des Abstandsbestimmungsultraschallsignals und des Funksignals wird zumindest gleichzeitig gestartet. Dies ist die einfachste Realisierungsmöglichkeit, da die das Funksignal und das Abstandsbestimmungsultraschallsignal empfangende Abstandsbestimmungseinheit dann aus dem zeitlichen Abstand des Empfangs des Funksignals und des Abstandsbestimmungsultraschallsignals direkt die Laufzeit des Abstandsbestimmungsultraschallsignals und somit den Abstand zur weiteren Abstandsbestimmungseinheit ermitteln kann. Alternativ wäre es beispielsweise auch möglich, das Abstandsbestimmungsultraschallsignal und das Funksignal zueinander zeitversetzt zu senden. Hierfür wäre es dann jedoch beispielsweise erforderlich, der empfangenden Abstandsbestimmungseinheit diesen Sendezeitversatz mitzuteilen, insbesondere im Funksignal, oder für alle Abstandsbestimmungseinheiten einen solchen einheitlichen Sendezeitversatz fest vorzugeben, so dass dieser Sendezeitversatz bei der Abstandsbestimmung berücksichtigt werden kann.

Erfindungsgemäß sendet die weitere Abstandsbestimmungseinheit ab dem Senden des Abstandsbestimmungsultraschallsignals nacheinander mehrere Funksignale, die jeweils als Information ihren zeitlichen Sendeabstand zum Abstandsbestimmungsultraschallsignal enthalten, wobei die Abstandsbestimmungseinheit aus dem zeitlichen Sendeabstand des nach Empfang des Abstandsbestimmungsultraschallsignals ersten vollständig empfangenen Funksignals den Abstand zu dieser weiteren Abstandsbestimmungseinheit ermittelt. Bei dieser Ausführungsform des Verfahrens ist in der empfangenden Abstandsbestimmungseinheit keine Zeitmessung des zeitlichen Abstands zwischen dem Empfang des Funksignals und dem Empfang des Abstandsermittlungsultraschallsignals erforderlich, denn dieser zeitliche Abstand wird, zumindest näherungsweise, in dem empfangenden Funksignal mitgeteilt. Somit ist es beispielsweise nicht erforderlich, dass die Abstandsbestimmungseinheit eine Zeitgebereinheit und/oder Echtzeituhr aufweist.

In einer möglichen Ausführungsform umfasst die Abstandsbestimmungseinheit oder die jeweilige Abstandsbestimmungseinheit der Vorrichtung jedoch eine Zeitgebereinheit. Diese Zeitgebereinheit wird beispielsweise zur eigenständigen Ermittlung des zeitlichen Abstands zwischen dem Empfang des Funksignals und dem Empfang des Abstandsultraschallsignals verwendet. Alternativ oder zusätzlich wird diese Zeitgebereinheit beispielsweise für eine oder mehrere andere Funktionen verwendet. Sie ist beispielsweise ein Bestandteil des Mikrocontrollers. Ausgebildet ist sie beispielsweise als ein Quartz oder als ein RC-Generator.

In einer möglichen Ausführungsform umfasst die Abstandsbestimmungseinheit oder die jeweilige Abstandsbestimmungseinheit der Vorrichtung eine Echtzeituhreinheit. Diese Echtzeituhreinheit ermöglicht es insbesondere, einem jeweils ermittelten Abstand eine Zeitangabe, insbesondere ein Datum und eine Uhrzeit, zuzuordnen und diese Daten zusammen zu speichern, insbesondere auch zusammen mit der eindeutigen Identifikation der weiteren Abstandsbestimmungseinheit, deren Abstand bestimmt wurde. Dadurch kann später eindeutig ermittelt werden, zu welcher Zeit welcher Abstand zu welcher weiteren Abstandsbestimmungseinheit und dadurch zu welcher Person oder zu welchem Objekt als Träger dieser weiteren Abstandsbestimmungseinheit ermittelt wurde. Beispielsweise können auf diese Weise bei über kurze Distanzen übertragbaren Krankheiten mögliche Infektionsketten ermittelt und dadurch weitere Krankheitsübertragungen möglichst frühzeitig verhindert werden.

Erfindungsgemäß umfasst die Abstandsbestimmungseinheit oder die jeweilige Abstandsbestimmungseinheit der Vorrichtung mindestens eine Sensoreinheit. Mittels dieser Sensoreinheit oder vorteilhafterweise mehrerer Sensoreinheiten können ein oder mehrere weitere Parameter erfasst werden und beispielsweise gespeichert und/oder mittels des Funksignals an eine jeweilige andere Abstandsbestimmungseinheit übertragen und dort ausgewertet und/oder gespeichert werden. Beispielsweise sind Sensoreinheiten zur Ermittlung einer Lufttemperatur, einer Körpertemperatur und/oder Hautleitfähigkeit der die jeweilige Abstandsbestimmungseinheit tragenden Person, einer Beschleunigung und/oder einer Neigung vorgesehen. Durch die Ermittlung der Beschleunigung und/oder Neigung wird es beispielsweise ermöglicht, die, insbesondere für Personen vorgesehene, Abstandsermittlungseinheit in einem unbewegten Zustand weitgehend vollständig zu deaktivieren, insbesondere mit Ausnahme der Sensoreinheit zur Ermittlung der Beschleunigung und/oder Neigung, so dass dadurch der elektrische Energieverbrauch weiter reduziert werden kann, insbesondere bei Nichtnutzung der Abstandsermittlungseinheit, beispielsweise wenn diese abgelegt ist.

In einer möglichen Ausführungsform umfasst die Abstandsbestimmungseinheit oder die jeweilige Abstandsbestimmungseinheit der Vorrichtung mindestens eine Datenübertragungsschnittstelle. Über diese mindestens eine Datenübertragungsschnittstelle können beispielsweise Daten aus der Speichereinheit der Abstandsbestimmungseinheit ausgelesen und/oder Daten darin gespeichert werden, beispielsweise über Bluetooth, BLE (Bluetooth Low Energy), RFID oder NFC. Ausgelesen werden beispielsweise ermittelte Abstände zu jeweiligen weiteren Abstandsbestimmungseinheiten und deren jeweilige eindeutige Identifikation, insbesondere auch die Zeitangabe, wann der jeweilige Abstand ermittelt wurde. In der Speichereinheit gespeichert wird beispielsweise initial die eigene eindeutige Identifikation der Abstandsbestimmungseinheit, beispielsweise in Form eines Namens und/oder einer Reisepass- oder Ausweisidentifikation der Person, der die Abstandsbestimmungseinheit zugeordnet ist. In der Speichereinheit können auch weitere Informationen abgespeichert werden, die optional über die Datenübertragungsschnittstelle übertragen werden können, insbesondere von der weiteren Abstandsbestimmungseinheit zur den Abstand zu dieser weiteren Abstandsbestimmungseinheit bestimmenden Abstandsbestimmungseinheit, welche diese Informationen beispielsweise bewerten und/oder speichern und/oder bei der Ausgabe einer Warnmeldung über die Ausgabeeinheit berücksichtigen kann und beispielsweise entsprechend mit ausgeben kann.

Das jeweilige oben zur Abstandsbestimmungseinheit geschilderte, insbesondere optionale, Merkmal kann beispielsweise eine Abstandsbestimmungseinheit oder können mehrere oder alle Abstandsbestimmungseinheiten der Vorrichtung aufweisen.

Die oben beschriebene Lösung ermöglicht somit insbesondere eine Detektierung einer Annäherung jeweils zweier Personen oder Objekte oder jeweils einer Person und eines Objektes, vorteilhafterweise inklusive deren eindeutiger Identifikation, und optional eine Abspeicherung der eindeutigen Identifikation zusammen mit dem jeweils ermittelten Abstand und vorteilhafterweise zusammen mit der Zeitangabe, wann der jeweilige Abstand ermittelt wurde.

Die beschriebene Lösung ermöglicht somit insbesondere eine Abstandsbestimmung der mindestens einen Abstandsbestimmungseinheit zur mindestens einen weiteren Abstandsbestimmungseinheit, bevorzugt mit gleichzeitig eindeutiger Identifikation der mindestens einen weiteren Abstandsbestimmungseinheit, zu welcher der Abstand bestimmt wurde, und somit vorteilhafterweise eine eindeutige Objektzuordnung oder Personenzuordnung.

Die beschriebene Lösung ermöglicht somit insbesondere eine Abstandsmessung von Personen, Objekten und/oder Personen zu Objekten, vorteilhafterweise eine eindeutige Zuordnung der ermittelten Abstände durch die eindeutige Identifikation der jeweiligen Abstandsbestimmungseinheit, zu welcher der jeweilige Abstand bestimmt wurde, vorteilhafterweise die Zuordnung des jeweils ermittelten Abstands und der jeweiligen eindeutigen Information zu einer Zeitangabe, wann der jeweilige Abstand ermittelt wurde, vorteilhafterweise die Abstandsbestimmung zu mehreren jeweiligen weiteren Abstandsbestimmungseinheiten, beispielsweise bis zu 100 weiteren Abstandsbestimmungseinheiten, in einem vorgegebenen Erfassungsbereich, und vorteilhafterweise einen schnellen Messtakt, so dass bei mehreren Abstandsbestimmungseinheiten im Erfassungsbereich vorteilhafterweise jede der Abstandsbestimmungseinheiten auf die oben beschriebene Weise ihren Abstand zu jeder weiteren Abstandsbestimmungseinheit innerhalb dieses Erfassungsbereichs ermitteln kann, und dies vorteilhafterweise in sehr kurzer Zeit, so dass auch in sich dynamisch verändernden Situationen, beispielsweise bei einer sich innerhalb des Erfassungsbereichs befindenden großen Personengruppe mit solchen Abstandsbestimmungseinheiten, beispielsweise auch bei hinzukommenden und sich daraus entfernenden Personen, vorteilhafterweise alle Abstände sicher bestimmt werden können. Beispielsweise kann über die Anzeigeeinheit eine aktuelle Anzeige direkt an der jeweiligen Person oder am jeweiligen Objekt erfolgen, insbesondere zugeordnet zum jeweiligen Abstand und zur jeweiligen eindeutigen Identifikation. Vorteilhafterweise kann mittels der jeweiligen Abstandsbestimmungseinheit ein jeweiliger auswertbarer Datensatz generiert werden, insbesondere umfassend mindestens den jeweils ermittelten Abstand, die eindeutige Identifikation der jeweiligen weiteren Abstandsermittlungseinheit, zu welcher der jeweilige Abstand ermittelt wurde, und die Zeitangabe (vorteilhafterweise inklusive Datum und Uhrzeit) der jeweiligen Abstandsermittlung. Vorteilhafterweise wird eine sicherheitsgerechte Lesbarkeit des jeweiligen Datensatzes ermöglicht, insbesondere über die Datenübertragungsschnittstelle, beispielsweise im Nahbereich RFID und/oder NFC und/oder im Fernbereich über Bluetooth und/oder BLE. Vorteilhafterweise sind Vorkehrungen zur Vermeidung einer Datenmanipulation vorgesehen. Durch die oben beschriebenen Maßnahmen zur elektrischen Energieeinsparung wird vorteilhafterweise eine sehr geringe elektrische Energieaufnahme ermöglicht. Dies ist besonders vorteilhaft für den Batterie- oder Akkubetrieb der Abstandsbestimmungseinheit. Die oben beschriebenen Komponenten der Abstandsbestimmungseinheit erfordern vorteilhafterweise nur einen sehr geringen Bauraum, so dass eine kleine und leichte Ausbildung der Abstandsbestimmungseinheit beispielsweise als Anstecker oder Aufkleber ermöglicht ist.

Die erfindungsgemäße Lösung ermöglicht somit die oben beschriebenen Funktionen und gleichzeitig eine Minimierung der Baugröße und einen sehr geringen Energieverbrauch. Des Weiteren gestattet diese Lösung das gleichberechtigte Zusammenwirken mehrerer Abstandsbestimmungseinheiten in einem Erfassungsbereich, beispielsweise auf gleiche Weise wie bei kollisionsfreien UHF-RFID-Lösungen, meshed Funksensornetzwerken und Bluetooth Beacon Anwendungen.

Wesentlich zur Erreichung der Low Power Forderung, d. h. des geringen Energieverbrauchs, ist die Verwendung eines zweifachen Ultraschallbursts, d. h. des als Wake Up Burst fungierenden Aktivierungsultraschallsignals und des als Messburst fungierenden Abstandsbestimmungsultraschallsignals. Vorteilhafterweise sind alle verwendeten Ultraschallsignale als oben bereits beschriebener Ultraschallburst, d. h. als Ultraschallsignalburst oder Ultraschallsburstsignal, ausgebildet. Dies betrifft somit vorteilhafterweise das Aktivierungsultraschallsignal, das Antwortultraschallsignal und das Abstandsbestimmungsultraschallsignal, je nachdem, ob das jeweilige Signal verwendet wird oder nicht.

Vorteilhafterweise befindet sich die jeweilige Abstandsbestimmungseinheit ansonsten, d. h. vorteilhafterweise wenn sie keine Abstandsbestimmung durchführt und keine Ultraschallsignale und/oder Funksignale sendet, im energiesparenden so genannten Sleep-Mode. Beispielsweise ist hier ausschließlich die Ultraschalleinheit oder nur deren Ultraschallempfangseinheit aktiviert, um insbesondere das Aktivierungsultraschallsignal einer jeweiligen anderen Abstandsbestimmungseinheit empfangen zu können.

Um weitere elektrische Energie zu sparen und eine hohe Datensicherheit zu erreichen, werden Daten vorteilhafterweise nicht sofort gesendet, sondern im Mikrocontroller vorverarbeitet und bleiben dann in der internen gesicherten Speichereinheit gespeichert und werden vorteilhafterweise nur auf Anforderung gesendet.

Die Ausgabe des ermittelten Abstands und/oder einer Abstandswarnung mittels der Ausgabeeinheit, beispielsweise mittels des Warntons und/oder der Lichtquelle oder der mehreren Lichtquellen, erfolgt vorteilhafterweise in kürzester Zeit, insbesondere sofort nach Ermittlung des Abstands, und steht somit dem Objekt oder der Person, an welcher die Abstandsermittlungseinheit angeordnet ist, sofort zur Verfügung. Vorteilhafterweise wird der jeweils ermittelte Abstand und/oder die Abstandswarnung, insbesondere zusammen mit der eindeutigen Identifikation der Abstandsbestimmungseinheit, zu welcher der Abstand bestimmt wurde, des Weiteren in der Speichereinheit gespeichert und kann zu einem späteren Zeitpunkt ausgelesen werden. Dies ermöglicht es insbesondere, diese Daten aus den Speichereinheiten aller Abstandsbestimmungseinheiten der Vorrichtung auszulesen und eine komplexe Distance-Analyse durchzuführen.

Ausführungsbeispiele der Erfindung werden im Folgenden anhand von Zeichnungen näher erläutert.

Darin zeigen:
- Figur 1: eine schematische Darstellung zweier Personen, welche jeweils eine Abstandsbestimmungseinheit einer Vorrichtung zur Abstandsbestimmung aufweisen,
- Figur 2: schematisch eine Ausführungsform einer Abstandsbestimmungseinheit,
- Figur 3: schematisch eine weitere Ausführungsform einer Abstandsbestimmungseinheit,
- Figur 4: schematisch eine weitere Ausführungsform einer Abstandsbestimmungseinheit,
- Figur 5: schematisch eine Ausführungsform eines Verfahrens zur Abstandsbestimmung, und
- Figur 6: schematisch eine weitere Ausführungsform eines Verfahrens zur Abstandsbestimmung.

Einander entsprechende Teile sind in allen Figuren mit den gleichen Bezugszeichen versehen.

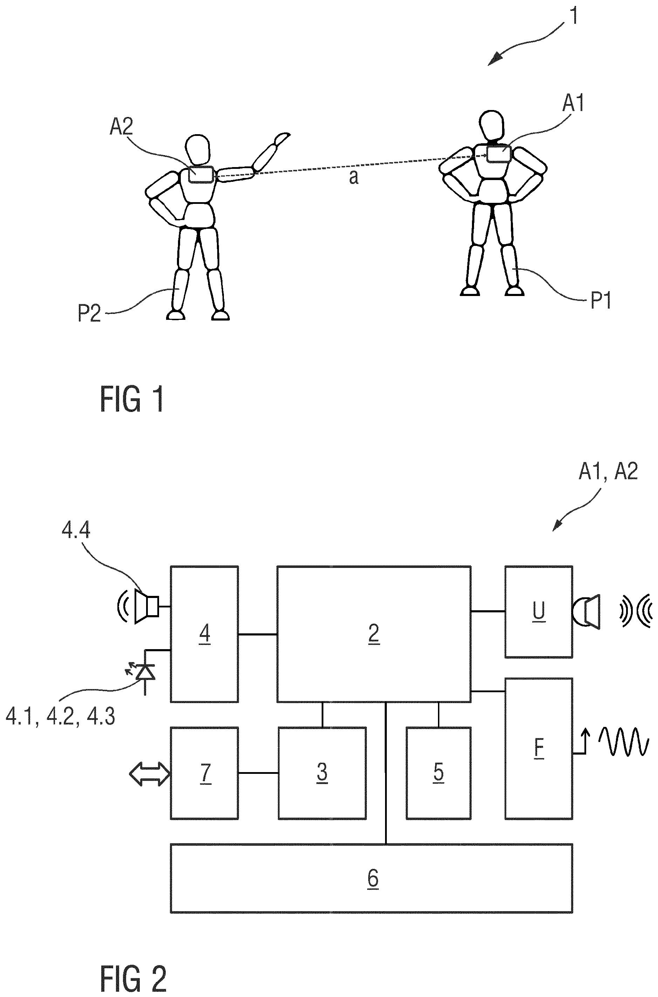

Figur 1 zeigt eine schematische Darstellung einer Person P1, im Folgenden auch als erste Person P1 bezeichnet, und einer weiteren Person P2, im Folgenden auch als zweite Person P2 bezeichnet, welche jeweils eine Abstandsbestimmungseinheit A1, A2 einer Vorrichtung 1 zur Abstandsbestimmung AB aufweisen. Dabei wird die Abstandsbestimmungseinheit A1 im Folgenden auch als erste Abstandsbestimmungseinheit A1 und die weitere Abstandsbestimmungseinheit A2 im Folgenden auch als zweite Abstandsbestimmungseinheit A2 bezeichnet. Diese beiden Abstandsbestimmungseinheiten A1, A2 können auf die im Folgenden beschriebene Weise ihren Abstand a zueinander bestimmen, insbesondere in einem im Folgenden beschriebenen Verfahren zur Abstandsbestimmung AB. Dies wird im Folgenden anhand der Abstandsbestimmung AB durch die hier als erste Abstandsbestimmungseinheit A1 bezeichnete Abstandsbestimmungseinheit A1 beschrieben, erfolgt jedoch vorteilhafterweise ebenso, entweder davor oder danach, auch auf umgekehrte Weise, d. h. dann nimmt die zweite Abstandsbestimmungseinheit A2 die Rolle der ersten Abstandsbestimmungseinheit A1 ein und die erste Abstandsbestimmungseinheit A1 nimmt die Rolle der zweiten Abstandsbestimmungseinheit A2 ein, und das im Folgenden näher beschriebene Verfahren zur Abstandsbestimmung AB erfolgt auf gleiche Weise.

Die Vorrichtung 1 kann mehr als diese beiden Abstandsbestimmungseinheiten A1, A2 aufweisen, beispielsweise bis zu 100 Abstandsbestimmungseinheiten A1, A2 oder mehr oder weniger Abstandsbestimmungseinheiten A1, A2. Die Vorrichtung 1 umfasst vorteilhafterweise stets diejenigen Abstandsbestimmungseinheiten A1, A2, welche sich innerhalb eines vorgegebenen Erfassungsbereichs zueinander befinden und daher den Abstand a zueinander bestimmen können. Vorteilhafterweise können gleichzeitig mehrere erste Abstandsbestimmungseinheiten A1 vorhanden sein, welche jeweils auf die im Folgenden beschriebene Weise ihren Abstand a zu derselben zweiten Abstandsbestimmungseinheit A2 ermitteln.

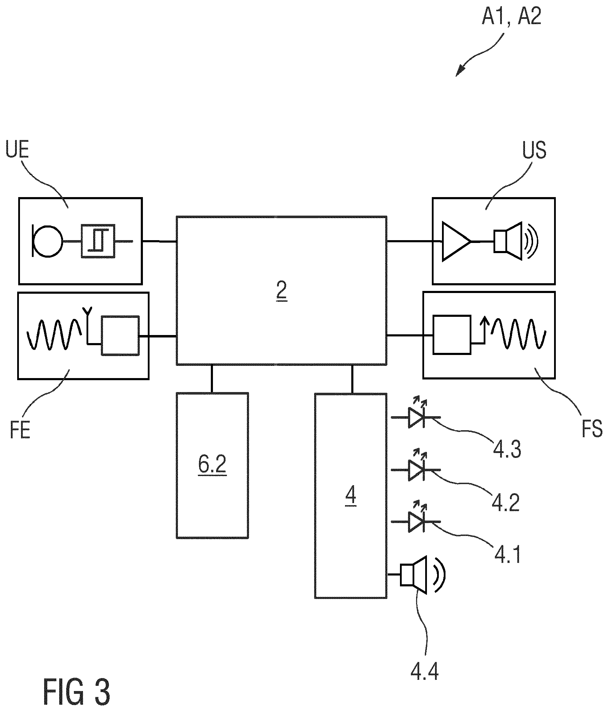

In den Figuren 2 bis 4 sind verschiedene Ausführungsformen der Abstandsbestimmungseinheit A1, A2 beispielhaft dargestellt.

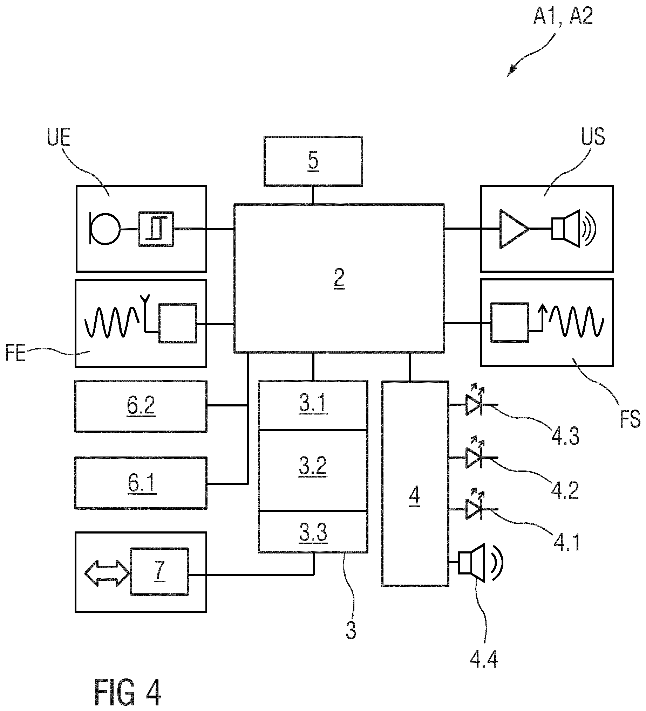

Die jeweilige Abstandsbestimmungseinheit A1, A2 umfasst eine Ultraschallsendeeinheit US, ausgebildet und eingerichtet zum Senden vorgegebener Ultraschallsignale ABUS, AUS, AWUS, eine Ultraschallempfangseinheit UE, ausgebildet und eingerichtet zum Empfangen von Ultraschallsignalen ABUS, AUS, AWUS weiterer Abstandsbestimmungseinheiten A2, A1, eine Funksendeeinheit FS, ausgebildet und eingerichtet zum Senden vorgegebener Funksignale FUS, eine Funkempfangseinheit FE, ausgebildet und eingerichtet zum Empfangen von Funksignalen FUS weiterer Abstandsbestimmungseinheiten A2, A1, einen Mikrocontroller 2, ausgebildet und eingerichtet zur Ermittlung des Abstands a zu der weiteren Abstandsbestimmungseinheit A2, A1 anhand mindestens eines von dieser weiteren Abstandsbestimmungseinheit A2, A1 empfangenen Abstandsbestimmungsultraschallsignals ABUS und mindestens eines von dieser weiteren Abstandsbestimmungseinheit A2, A1 empfangenen Funksignals FUS, und eine in den Figuren nicht näher dargestellte elektrische Energiequelle, welche insbesondere als Batterie oder Akkumulator ausgebildet ist. Des Weiteren umfasst die Abstandsbestimmungseinheit A1, A2, wie in den Figuren 2 und 4 gezeigt, eine Speichereinheit 3, ausgebildet und eingerichtet zur Speicherung einer, insbesondere eindeutigen, Identifikation der weiteren Abstandsbestimmungseinheit A2, A1, welche vorteilhafterweise mittels des Funksignals FUS von der weiteren Abstandsbestimmungseinheit A2, A1 an die Abstandsbestimmungseinheit A1, A2 übermittelt wurde, und des ermittelten Abstands a der weiteren Abstandsbestimmungseinheit A2, A1 vorteilhafterweise zusammen mit einer Zeitangabe, umfassend insbesondere Datum und Uhrzeit, zu welcher die Abstandsbestimmung AB durchgeführt wurde, und/oder, wie in den Figuren 2 bis 4 gezeigt, eine Ausgabeeinheit 4, ausgebildet und eingerichtet zur Ausgabe des ermittelten Abstands a und/oder eines mit dem ermittelten Abstand a korrespondierenden Ausgabesignals und beispielsweise zusätzlich zur Ausgabe der eindeutigen Identifikation der weiteren Abstandsbestimmungseinheit A2, A1.

Das Funksignal FUS umfasst beispielsweise die eindeutige Identifikation der weiteren Abstandsermittlungseinheit A2, A1, optional weitere Daten, insbesondere der Person P2, P1, welche die weitere Abstandsermittlungseinheit A2, A1 trägt, beispielsweise Gesundheitsdaten, beispielsweise ein Zeitsignal und/oder eine Verzögerungszeit bis zum Senden des Abstandsbestimmungsultraschallsignals ABUS, und beispielsweise eine Signalstärke des Ultraschallsignals und/oder des Funksignals FUS.

Die Ausgabeeinheit 4 umfasst beispielsweise mehrere, insbesondere verschiedenfarbige, Lichtquellen 4.1, 4.2, 4.3, insbesondere jeweils ausgebildet als eine LED. Je nach ermitteltem Abstand a kann dann beispielsweise vorgesehen sein, dass eine dem jeweiligen Abstand a oder Abstandsbereich zugeordnete Lichtquelle 4.1, 4.2, 4.3 aufleuchtet, beispielsweise bei einem Abstand a von weniger als einem Meter eine rote Lichtquelle 4.1, bei einem Abstand a zwischen einem Meter und zwei Metern eine gelbe Lichtquelle 4.2, und bei einem Abstand a zwischen zwei Metern und drei Metern eine grüne Lichtquelle 4.3. Alternativ oder zusätzlich kann die Ausgabeeinheit 4 beispielsweise eine Tonausgabe 4.4 zur Ausgabe eines Warntons umfassen, insbesondere bei Unterschreitung eines vorgegebenen Mindestabstands von beispielsweise einem Meter, und/oder beispielsweise zur Ausgabe einer Sprachinformation. Alternativ oder zusätzlich kann die Ausgabeeinheit 4 beispielsweise eine Vibrationseinheit umfassen. Alternativ oder zusätzlich kann die Ausgabeeinheit 4 beispielsweise auch über die Funksendeeinheit FS, zum Beispiel mittels BLE, Ausgabeinformationen senden. Des Weiteren kann beispielsweise auch bei von Vorgaben abweichenden Körpersensordaten eine Ausgabe, zum Beispiel eine Warnung, vorgesehen sein.

Die Ultraschallsendeeinheit US und die Ultraschallempfangseinheit UE sind beispielsweise als eine gemeinsame Ultraschalleinheit U ausgebildet, wie anhand der Ausführungsform gemäß Figur 2 gezeigt. Die Funksendeeinheit FS und die Funkempfangseinheit FE sind beispielsweise als eine gemeinsame Funkeinheit F ausgebildet, wie ebenfalls anhand der Ausführungsform gemäß Figur 2 gezeigt. Als Funktechnologie wird beispielsweise Bluetooth, BLE (Bluetooth Low Energy), RFID oder NFC verwendet.

Der Mikrocontroller 2 ist des Weiteren vorteilhafterweise auch für eine zentrale Ablaufsteuerung, insbesondere auch zur Durchführung des Verfahrens, vorgesehen, insbesondere auch zur Steuerung der anderen Komponenten der Abstandsbestimmungseinheit A1, A2. Dieser Mikrocontroller 2 kann beispielsweise auch in die Funkeinheit F integriert sein.

Zweckmäßigerweise umfasst die Abstandsbestimmungseinheit A1, A2 oder die jeweilige Abstandsbestimmungseinheit A1, A2 der Vorrichtung 1 eine in den Figuren nicht dargestellte Zeitgebereinheit, insbesondere einen Quartz oder einen RC-Generator. Diese Zeitgebereinheit wird beispielsweise zur eigenständigen Ermittlung des zeitlichen Abstands zwischen dem Empfang des Funksignals FUS und dem Empfang des Abstandsbestimmungsultraschallsignals ABUS verwendet. Alternativ oder zusätzlich wird diese Zeitgebereinheit beispielsweise für eine oder mehrere andere Funktionen verwendet. Insbesondere wird diese Zeitgebereinheit zur Erzeugung der Funksignale FUS und/oder zur Ermittlung und Übertragung einer Zeitbasis zwischen den Abstandsermittlungseinheiten A1, A2 verwendet.

In einer möglichen Ausführungsform umfasst die Abstandsbestimmungseinheit A1, A2 oder die jeweilige Abstandsbestimmungseinheit A1, A2 der Vorrichtung 1 eine Echtzeituhreinheit 5. Diese Echtzeituhreinheit 5 ermöglicht es insbesondere, einem jeweils ermittelten Abstand a eine Zeitangabe, insbesondere ein Datum und eine Uhrzeit, zuzuordnen und diese Daten zusammen zu speichern, insbesondere auch zusammen mit der eindeutigen Identifikation der weiteren Abstandsbestimmungseinheit A2, A1, deren Abstand a bestimmt wurde. Dadurch kann später eindeutig ermittelt werden, zu welcher Zeit welcher Abstand a zu welcher weiteren Abstandsbestimmungseinheit A2, A1 und dadurch zu welcher Person P2, P1 oder zu welchem Objekt als Träger dieser weiteren Abstandsbestimmungseinheit A2, A1 ermittelt wurde. Beispielsweise können auf diese Weise bei über kurze Distanzen übertragbaren Krankheiten mögliche Infektionsketten ermittelt und dadurch weitere Krankheitsübertragungen möglichst frühzeitig verhindert werden.

In einer möglichen Ausführungsform umfasst die Abstandsbestimmungseinheit A2, A1 oder die jeweilige Abstandsbestimmungseinheit A2, A1 der Vorrichtung 1 mindestens eine Sensoreinheit 6. Mittels dieser Sensoreinheit 6 oder vorteilhafterweise mehrerer Sensoreinheiten 6 können ein oder mehrere weitere Parameter erfasst werden und beispielsweise gespeichert und/oder mittels des Funksignals FUS an eine jeweilige andere Abstandsbestimmungseinheit A2, A1 übertragen und dort ausgewertet und/oder gespeichert werden. Beispielsweise sind mindestens eine Sensoreinheiten 6 zur Ermittlung einer Lufttemperatur und/oder Luftfeuchte und/oder zur Ermittlung von Gasen, mindestens eine Körpersensoreinheit 6.1 zur Ermittlung einer Körpertemperatur und/oder Hautleitfähigkeit und/oder des Pulses und/oder anderer Körperparameter der die jeweilige Abstandsbestimmungseinheit A1, A2 tragenden Person P1, P2 und/oder mindestens eine Beschleunigungssensoreinheit 6.2 zur Ermittlung einer Beschleunigung und/oder einer Neigung und/oder eine Magnetfeldsensoreinheit zur Bestimmung der Himmelsrichtung vorgesehen. Die ermittelte Lufttemperatur kann beispielsweise zur Justierung des für die Ermittlung des Abstands a aus dem zeitverzögerten Empfang des Abstandsbestimmungsultraschallsignals ABUS gegenüber dem Funksignal FUS verwendeten Wertes der Schallgeschwindigkeit verwendet werden, wodurch eine Genauigkeitsverbesserung der Abstandsmessung erreicht werden kann. Durch die Ermittlung der Beschleunigung und/oder Neigung wird es beispielsweise ermöglicht, die, insbesondere für Personen P1, P2 vorgesehene, Abstandsermittlungseinheit A1, A2 in einem unbewegten Zustand weitgehend vollständig zu deaktivieren, insbesondere mit Ausnahme der Beschleunigungssensoreinheit 6.2 zur Ermittlung der Beschleunigung und/oder Neigung, so dass dadurch der elektrische Energieverbrauch reduziert werden kann, insbesondere bei Nichtnutzung der Abstandsermittlungseinheit A1, A2, beispielsweise wenn diese abgelegt ist.

In einer möglichen Ausführungsform umfasst die Abstandsbestimmungseinheit A1, A2 oder die jeweilige Abstandsbestimmungseinheit A1, A2 der Vorrichtung 1 mindestens eine Datenübertragungsschnittstelle 7. Über diese mindestens eine Datenübertragungsschnittstelle 7 können beispielsweise Daten aus der Speichereinheit 3 der Abstandsbestimmungseinheit A1, A2 ausgelesen und/oder Daten darin gespeichert werden, beispielsweise über Bluetooth, BLE (Bluetooth Low Energy), RFID oder NFC. Sie kann beispielsweise als HF-Schnittstelle oder UHF-Schnittstelle ausgebildet sein. Ausgelesen werden beispielsweise ermittelte Abstände a zu jeweiligen weiteren Abstandsbestimmungseinheiten A2, A1 und deren jeweilige Identifikation. In der Speichereinheit 3 gespeichert wird beispielsweise initial die eigene eindeutige Identifikation der Abstandsbestimmungseinheit A1, A2, beispielsweise in Form eines Namens und/oder einer Reisepass- oder Ausweisidentifikation der Person P1, P2, der die Abstandsbestimmungseinheit A1, A2 zugeordnet ist.

Die Datenschnittstelle 7 ist zweckmäßigerweise zugriffsgeschützt, insbesondere um die Sicherheit der Personendaten und Identifikationsdaten zu ermöglichen.

Die Speichereinheit 3 ist insbesondere ein nichtflüchtiger Speicher. Sie ist insbesondere zugriffsgeschützt. Es kann ein lesender und/oder schreibender Speicherzugriff, beispielsweise über die Datenübertragungsschnittstelle 7, vorgesehen sein.

Beispielsweise weist die Speichereinheit 3 mehrere Speicherbereiche 3.1, 3.2, 3.3 auf. Der erste Speicherbereich 3.1 ist beispielsweise zur Speicherung eigener Identifikationsdaten vorgesehen. Dieser erste Speicherbereich 3.1 ist vorteilhafterweise zugriffsgeschützt. Beispielsweise ist über NFC oder RFID ein lesender und schreibender Zugriff und über BLE oder Bluetooth nur ein lesender Zugriff möglich. Der zweite Speicherbereich 3.2 ist beispielsweise zur Speicherung der ermittelten Abstände a zu anderen Abstandsbestimmungseinheiten A2, A1, deren jeweiliger Identifikation und eines jeweiligen Zeitpunktes, insbesondere Uhrzeit und Datum, der jeweiligen Abstandsbestimmung AB vorgesehen. Hier können beispielsweise auch mittels der Ausgabeeinheit 4 ausgegebene Abstandswarnmeldungen gespeichert werden. Beispielsweise kann auch eine jeweilige Signalstärke des Ultraschallsignals ABUS, AUS, AWUS und/oder Funksignals FUS erfasst und gespeichert werden. Der dritte Speicherbereich 3.3 ist beispielsweise zur Speicherung weiterer Daten vorgesehen, beispielsweise der mittels der Sensoreinheit 6, insbesondere der Körpersensoreinheit 6.1, ermittelten Sensordaten und/oder Daten zum Gesundheitszustand der Person P1, P2, der die jeweilige Abstandsbestimmungseinheit A1, A2 zugeordnet ist. Die Sensordaten werden vorteilhafterweise zusammen mit dem Zeitpunkt ihrer Erfassung gespeichert.

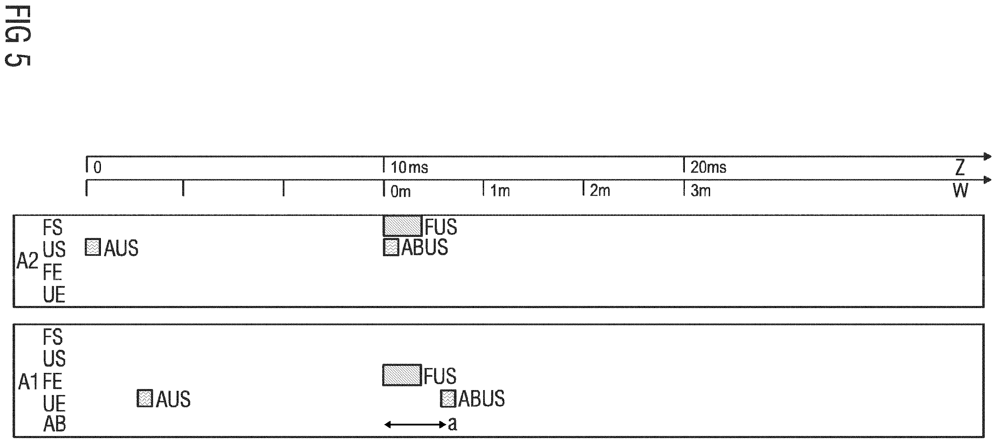

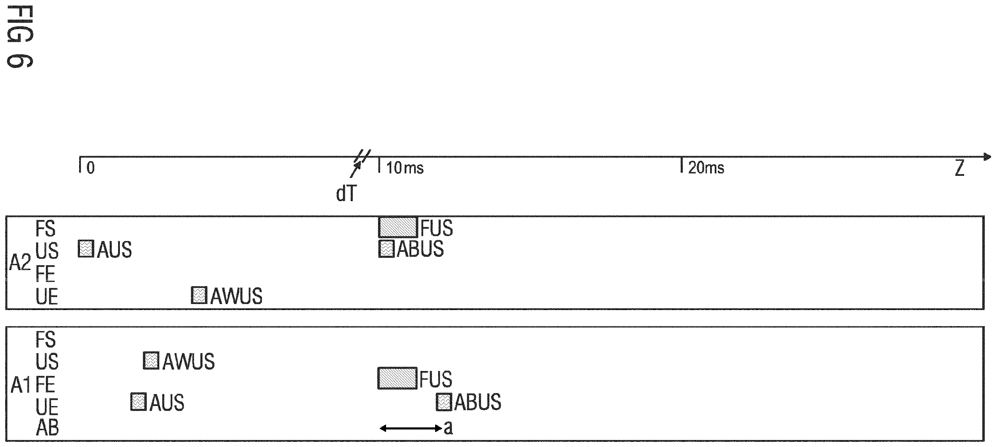

Im Verfahren zur Abstandsbestimmung AB mittels der Vorrichtung 1 empfängt die erste Abstandsbestimmungseinheit A1 von mindestens einer zweiten Abstandsbestimmungseinheit A2 das Abstandsbestimmungsultraschallsignal ABUS und das Funksignal FUS und ermittelt daraus den Abstand a zu dieser zweiten Abstandsbestimmungseinheit A2, wie in den Figuren 5 und 6 anhand von zwei beispielhaften Ausführungsformen gezeigt. Vorteilhafterweise speichert die erste Abstandsbestimmungseinheit A1 den ermittelten Abstand a zusammen mit der eindeutigen Identifikation der zweiten Abstandsbestimmungseinheit A2 in der Speichereinheit 3, vorteilhafterweise zusammen mit einer Zeitangabe, inklusive Datum und Uhrzeit, bezüglich der Durchführung der Abstandsbestimmung AB. Alternativ oder zusätzlich gibt die erste Abstandsbestimmungseinheit A1 vorteilhafterweise den ermittelten Abstands a und/oder ein mit dem ermittelten Abstand a korrespondierendes Ausgabesignal über die Ausgabeeinheit 4 aus, beispielsweise zusammen mit der eindeutigen Identifikation der zweiten Abstandsbestimmungseinheit A2.

Die Funktionsweise der Abstandsbestimmungseinheiten A1, A2 und somit der Vorrichtung 1 und des Verfahrens beruht auf der unterschiedlichen Ausbreitungsgeschwindigkeit des Funksignals FUS mit der Lichtgeschwindigkeit von 300.000 Km/s und des Abstandsbestimmungsultraschallsignals ABUS mit der Schallgeschwindigkeit von 343 m/s. Dadurch entsteht bei gleichzeitigem Senden des Funksignals FUS und des Abstandsbestimmungsultraschallsignals ABUS durch die zweite Abstandsbestimmungseinheit A2 eine Verzögerung zwischen dem Empfang des Funksignals FUS und dem Empfang des Abstandsbestimmungsultraschallsignals ABUS durch die erste Abstandsbestimmungseinheit A1, welche mit dem Abstand a zwischen erster und zweiter Abstandsbestimmungseinheit A1, A2 korrespondiert.

Der Abstand a zur zweiten Abstandsbestimmungseinheit A2 wird somit von der ersten Abstandsbestimmungseinheit A1 vorteilhafterweise anhand der Laufzeit des empfangenen Abstandsbestimmungsultraschallsignals ABUS zwischen der sendenden zweiten Abstandsbestimmungseinheit A2 und der empfangenden ersten Abstandsbestimmungseinheit A1 ermittelt. Diese Laufzeit des empfangenen Abstandsbestimmungsultraschallsignals ABUS wird in den gezeigten Beispielen anhand des zeitlichen Abstands zwischen dem Empfang des Abstandsbestimmungsultraschallsignals ABUS und dem Empfang des Funksignals FUS ermittelt.

In den hier gezeigten Beispielen gemäß Figur 5 und Figur 6 ist vorgesehen, dass die erste Abstandsbestimmungseinheit A1 zunächst ein Aktivierungsultraschallsignal AUS von der zweiten Abstandsbestimmungseinheit A2 empfängt und daraufhin die Funkempfangseinheit FE aktiviert und danach das Abstandsbestimmungsultraschallsignal ABUS und das Funksignal FUS empfängt. Im hier gezeigten Beispiel gemäß Figur 6 sendet die erste Abstandsbestimmungseinheit A1 nach Empfang des Aktivierungsultraschallsignals AUS der zweiten Abstandsbestimmungseinheit A2 zunächst ein Antwortultraschallsignal AWUS und die zweite Abstandsbestimmungseinheit A2 empfängt das Antwortultraschallsignal AWUS und sendet daraufhin das Abstandsbestimmungsultraschallsignal ABUS und das Funksignal FUS.

Die beiden in den Figuren 5 und 6 dargestellten Ausführungsformen des Verfahrens werden nun nochmals detailliert beschrieben.

Dargestellt sind in Figur 5 und Figur 6 die beiden Abstandsbestimmungseinheiten A1, A2 mit ihren Funksendeeinheiten FS, Funkempfangseinheiten FE, Ultraschallsendeeinheiten US und Ultraschallempfangseinheiten UE. Dargestellt ist jeweils die Abstandsbestimmung AB des Abstands a zwischen der ersten und zweiten Abstandsbestimmungseinheit A1, A2 durch die erste Abstandsbestimmungseinheit A1. Dieser Abstand a beträgt im hier dargestellten Beispiel 0,5 m. Dargestellt sind in Figur 5 und Figur 6 jeweils eine Zeitleiste Z und in Figur 5 zudem eine Abstandsleiste W.

Im Beispiel gemäß Figur 5 sendet die zweite Abstandsbestimmungseinheit A2 zunächst mittels ihrer Ultraschallsendeeinheit US das Aktivierungsultraschallsignal AUS und anschließend in einem vorgegebenen Zeitabstand mittels ihrer Ultraschallsendeeinheit US das Abstandsbestimmungsultraschallsignal ABUS und zeitgleich mittels ihrer Funksendeeinheit FS das Funksignal FUS. Ihre Funkempfangseinheit FE und Ultraschallempfangseinheit UE sind währenddessen deaktiviert, so dass ein entsprechend geringer elektrischer Energieverbrauch erreicht wird. Bei der ersten Abstandsermittlungseinheit A1 ist zunächst nur die Ultraschallempfangseinheit UE aktiviert. Die Funksendeeinheit FS, Funkempfangseinheit FE und Ultraschallsendeeinheit US sind deaktiviert, wodurch auch bei einem dauerhaft aktivierten Betrieb der Ultraschallempfangseinheit UE nur ein sehr geringer elektrischer Energieverbrauch vorliegt.

Die erste Abstandsermittlungseinheit A1 empfängt mit ihrer Ultraschallempfangseinheit UE das von der zweiten Abstandsermittlungseinheit A2 gesendete Aktivierungsultraschallsignal AUS, aufgrund des Abstandes a von 0,5 m gegenüber dem Sendezeitpunkt zeitverzögert. Aufgrund dieses Empfangs des Aktivierungsultraschallsignals AUS aktiviert sie ihre Funkempfangseinheit FE. Diese bleibt dann bis zum Empfang des Funksignals FUS aktiviert und wird danach vorteilhafterweise wieder deaktiviert. Sie empfängt dann mittels ihrer Funkempfangseinheit FE das von der zweiten Abstandsermittlungseinheit A2 gesendete Funksignal FUS, aufgrund der hohen Ausbreitungsgeschwindigkeit des Funksignals FUS bereits zum Sendezeitpunkt oder zumindest im Wesentlichen zum Sendezeitpunkt. Das von der zweiten Abstandsbestimmungseinheit A2 gesendete Abstandsbestimmungsultraschallsignal ABUS empfängt die erste Abstandsbestimmungseinheit A1 mittels ihrer Ultraschallempfangseinheit UE aufgrund der geringen Ausbreitungsgeschwindigkeit zeitverzögert gegenüber dem Sendezeitpunkt. Diese Zeitverzögerung korrespondiert mit dem Abstand a der beiden Abstandsbestimmungseinheiten A1, A2, wie anhand der Zeitleiste Z und Abstandsleiste W deutlich wird. Die erste Abstandsbestimmungseinheit A1 führt nun mittels dieses zeitlichen Abstandes zwischen dem Empfang des Funksignals FUS und dem Empfang des Abstandsbestimmungsultraschallsignals ABUS die Abstandsbestimmung AB durch und ermittelt aufgrund der Ausbreitungsgeschwindigkeit des Abstandsbestimmungsultraschallsignals ABUS von 343 m/s den Abstand a zwischen den beiden Abstandsbestimmungseinheiten A1, A2 von 0,5 m.

Nach dem Empfang des Funksignals FUS wird vorteilhafterweise die Funkempfangseinheit FE wieder deaktiviert. Nach dem Empfang des Abstandsbestimmungsultraschallsignals ABUS wird vorteilhafterweise die Ultraschallempfangseinheit UE wieder deaktiviert.

Der Zeitabstand zwischen dem Senden des Aktivierungsultraschallsignals AUS und dem Senden des Funksignals FUS und des Abstandsbestimmungsultraschallsignals ABUS kann beispielsweise durch einen gewünschten Abstandsbereich, innerhalb dessen Abstände ermittelt werden sollen (bei einem Abstandsbereich von beispielsweise 3 m sind dies 10 ms), zusätzlich einer Einschaltverzögerung der Funkempfangseinheit FE ermittelt werden. Vorteilhafterweise führt die erste Abstandsbestimmungseinheit A1 eine Pegelbewertung des Aktivierungsultraschallsignals AUS und des Abstandsbestimmungsultraschallsignals ABUS durch, um sicherzustellen, dass beide Ultraschallsignale AUS, ABUS von derselben Abstandsbestimmungseinheit, d. h. von der zweiten Abstandsbestimmungseinheit A2, gesendet wurden.

Weisen die erste und zweite Abstandsbestimmungseinheit A1, A2 einen größeren Abstand a voneinander auf, so liegt eine entsprechend größere zeitliche Verzögerung zwischen dem Empfang des Funksignals FUS und des Abstandsbestimmungsultraschallsignals ABUS durch die erste Abstandsbestimmungseinheit A1 vor, woraus der entsprechende Abstand a ermittelt werden kann. Beispielsweise sollen nur Abstände bis zu einem vorgegebenen Maximalwert ermittelt werden. Dies wird, wie oben bereits erwähnt, durch den zeitlichen Abstand zwischen dem Senden des Aktivierungsultraschallsignals AUS und dem Senden des Abstandsbestimmungsultraschallsignals ABUS und des Funksignals FUS sichergestellt, denn wenn der Abstand a zwischen den beiden Abstandsbestimmungseinheiten A1, A2 zu groß ist, empfängt die erste Abstandsbestimmungseinheit A1 das Aktivierungsultraschallsignal AUS aufgrund der durch den großen Abstand a erheblich längeren Zeitverzögerung zwischen Senden und Empfang erst, nachdem das Funksignal FUS durch die zweite Abstandsbestimmungseinheit A2 bereits gesendet wurde oder zumindest so spät, dass sie ihre Funkempfangseinheit FE nicht mehr bis zum Senden des Funksignals FUS durch die zweite Abstandsbestimmungseinheit A2 aktivieren kann. Daher wird sie zwar, wenn sie noch ausreichend nah an der zweiten Abstandsbestimmungseinheit A2 positioniert ist, das Aktivierungsultraschallsignal AUS empfangen und daraufhin ihre Funkempfangseinheit FE aktivieren, jedoch das Funksignal FUS nicht mehr empfangen. Eine Abstandsermittlung AB erfolgt dadurch nicht. Zweckmäßigerweise ist dann vorgesehen, dass die erste Abstandsbestimmungseinheit A1 ihre Funkempfangseinheit FE nach einer vorgegebenen Zeitspanne ohne Empfang eines Funksignals FUS wieder deaktiviert, um elektrische Energie zu sparen.

In der anderen Ausführungsform des Verfahrens gemäß Figur 6 sendet die zweite Abstandsbestimmungseinheit A2 ebenfalls zunächst mittels ihrer Ultraschallsendeeinheit US das Aktivierungsultraschallsignal AUS. Hier aktiviert sie jedoch gleichzeitig ihre Ultraschallempfangseinheit UE für einen vorgegebenen Zeitraum und wartet auf ein Antwortultraschallsignal AWUS zumindest einer ersten Abstandsbestimmungseinheit A1. Ihre Funkempfangseinheit FE bleibt deaktiviert. Empfängt sie innerhalb dieses vorgegebenen Zeitraums kein solches Antwortultraschallsignal AWUS, so sendet sie weder das Funksignal FUS noch das Abstandsbestimmungsultraschallsignal ABUS. Im hier dargestellten Beispiel wird dieses Aktivierungsultraschallsignal AUS jedoch von der ersten Abstandsbestimmungseinheit A1 empfangen, deren Funksendeeinheit FS und Funkempfangseinheit FE energiesparend deaktiviert sind. Die erste Abstandsbestimmungseinheit A1 sendet daraufhin mittels ihrer Ultraschallsendeeinheit US das Antwortultraschallsignal AWUS an die zweite Abstandsbestimmungseinheit A2, welche dieses Antwortultraschallsignal AWUS mit ihrer Ultraschallempfangseinheit UE empfängt. Vorteilhafterweise führt sie eine Pegelbewertung des empfangenen Antwortultraschallsignals AWUS durch, um sicherzustellen, dass es sich tatsächlich um ein Antwortultraschallsignal AWUS und nicht um eine Reflektion ihres Aktivierungsultraschallsignals AUS handelt. Anschließend sendet sie zum vorgegebenen Zeitpunkt, d. h. mit einer vorgegebenen Verzögerung zum Aktivierungsultraschallsignal AUS, das Funksignal FUS mittels ihrer Funksendeeinheit FS und zeitgleich mittels ihrer Ultraschallsendeeinheit US das Abstandsbestimmungsultraschallsignal ABUS. Ihre Funkempfangseinheit FE bleibt währenddessen aus Energiespargründen deaktiviert.

Zusätzlich zum oben beschriebenen Senden des Antwortultraschallsignals AWUS aktiviert die erste Abstandsbestimmungseinheit A1 nach dem Empfang des Aktivierungsultraschallsignals AUS des Weiteren ihre Funkempfangseinheit FE, so dass sie nun mittels ihrer Funkempfangseinheit FE das von der zweiten Abstandsbestimmungseinheit A2 gesendete Funksignal FUS und aufgrund des Abstands a entsprechend zeitlich verzögert mittels ihrer Ultraschallempfangseinheit UE das Abstandsbestimmungsultraschallsignal ABUS empfängt. Sie empfängt somit mittels ihrer Funkempfangseinheit FE das von der zweiten Abstandsermittlungseinheit A2 gesendete Funksignal FUS, aufgrund der hohen Ausbreitungsgeschwindigkeit des Funksignals FUS bereits zum Sendezeitpunkt oder zumindest im Wesentlichen zum Sendezeitpunkt. Das von der zweiten Abstandsbestimmungseinheit A2 gesendete Abstandsbestimmungsultraschallsignal ABUS empfängt die erste Abstandsbestimmungseinheit A1 mittels ihrer Ultraschallempfangseinheit UE aufgrund der geringen Ausbreitungsgeschwindigkeit zeitverzögert gegenüber dem Sendezeitpunkt. Diese Zeitverzögerung korrespondiert mit dem Abstand a der beiden Abstandsbestimmungseinheiten A1, A2. Die erste Abstandsbestimmungseinheit A1 führt nun mittels dieses zeitlichen Abstandes zwischen dem Empfang des Funksignals FUS und dem Empfang des Abstandsbestimmungsultraschallsignals ABUS die Abstandsbestimmung AB durch und ermittelt aufgrund der Ausbreitungsgeschwindigkeit des Abstandsbestimmungsultraschallsignals ABUS von 343 m/s den Abstand a zwischen den beiden Abstandsbestimmungseinheiten A1, A2 von 0,5 m.

Nach dem Empfang des Funksignals FUS wird vorteilhafterweise die Funkempfangseinheit FE wieder deaktiviert. Nach dem Empfang des Abstandsbestimmungsultraschallsignals ABUS wird vorteilhafterweise die Ultraschallempfangseinheit UE wieder deaktiviert.

Der Zeitabstand zwischen dem Senden des Aktivierungsultraschallsignals AUS und dem Senden des Funksignals FUS und des Abstandsbestimmungsultraschallsignals ABUS kann beispielsweise durch einen gewünschten Abstandsbereich, innerhalb dessen Abstände ermittelt werden sollen (bei einem Abstandsbereich von beispielsweise 3 m sind dies 10 ms), zusätzlich einer Einschaltverzögerung der Funkempfangseinheit FE ermittelt werden. Es kann hier jedoch beispielsweise eine zusätzlicher Zeitabstand dT zwischen dem Senden des Aktivierungsultraschallsignals AUS und des Funksignals FUS und Abstandbestimmungsultraschallsignals ABUS vorgegeben werden, beispielsweise parametrierbar zwischen 0 und 100 ms.

Weisen die erste und zweite Abstandsbestimmungseinheit A1, A2 einen größeren Abstand a voneinander auf, so liegt eine entsprechend größere zeitliche Verzögerung zwischen dem Empfang des Funksignals FUS und des Abstandsbestimmungsultraschallsignals ABUS durch die erste Abstandsbestimmungseinheit A1 vor, woraus der entsprechende Abstand a ermittelt werden kann.

Beispielsweise sollen nur Abstände bis zu einem vorgegebenen Maximalwert ermittelt werden. Dies wird hier einerseits durch das Empfangsfenster der Ultraschallempfangseinheit UE der zweiten Abstandsbestimmungseinheit A2 sichergestellt, denn wenn die erste Abstandsbestimmungseinheit A1 einen zu großen Abstand a zur zweiten Abstandsbestimmungseinheit A2 aufweist, wird sie das Aktivierungsultraschallsignal AUS zu spät empfangen. Sie wird dann zwar ebenfalls ihre Funkempfangseinheit FE aktivieren und das Antwortultraschallsignal AWUS senden, jedoch wird dieses Antwortultraschallsignal AWUS von der zweiten Abstandsbestimmungseinheit A2 nicht mehr empfangen, da sie ihre Ultraschallempfangseinheit UE bereits wieder deaktiviert hat. Die zweite Abstandsbestimmungseinheit A2 wird dann kein Funksignal FUS und kein Abstandsbestimmungsultraschallsignal ABUS senden. Alternativ, wenn die zweite Abstandsbestimmungseinheit A2 bereits rechtzeitig ein Antwortultraschallsignal AWUS einer anderen ersten Abstandsbestimmungseinheit A1 empfangen hat und daraufhin das Funksignal FUS und das Abstandsbestimmungsultraschallsignal ABUS sendet, wird die zu weit entfernte weitere erste Abstandsbestimmungseinheit A1 das Funksignal FUS nicht empfangen, da sie das Aktivierungsultraschallsignal AUS von der zweiten Abstandsbestimmungseinheit A2 zu spät empfangen hat und dadurch ihre Funkempfangseinheit FE erst aktiviert hat, nachdem das Funksignal FUS bereits von der zweiten Abstandsbestimmungseinheit A2 gesendet wurde, oder zumindest so spät aktiviert hat, dass ihre Funkempfangseinheit FE nicht mehr bis zum Senden des Funksignals FUS aktiviert war. Daher wird sie zwar, wenn sie noch ausreichend nah an der zweiten Abstandsbestimmungseinheit A2 positioniert ist, das Aktivierungsultraschallsignal AUS empfangen und daraufhin ihre Funkempfangseinheit FE aktivieren, jedoch das Funksignal FUS nicht mehr empfangen. Eine Abstandsermittlung AB erfolgt dadurch nicht. Zweckmäßigerweise ist dann vorgesehen, dass die erste Abstandsbestimmungseinheit A1 ihre Funkempfangseinheit FE nach einer vorgegebenen Zeitspanne ohne Empfang eines Funksignals FUS wieder deaktiviert, um elektrische Energie zu sparen.

In dem Verfahren können beispielsweise sowohl vor dem Versand des jeweiligen Ultraschallsignals AUS, AWUS, ABUS als auch vor dem Versand des Funksignals FUS durch die gerade aktive Abstandsermittlungseinheit A1, A2 Techniken wie beispielsweise "Listen before Talk" angewendet werden. Hiermit wird vermieden, dass gerade aktive Vorgänge gestört werden. Ergänzend können gängige Antikollisions-Technologien wie Kanal-Hopping und/oder Frequenzhopping für die Ultraschallsignale AUS, AWUS, ABUS und/oder für das Funksignal FUS verwendet werden, um Datenkollisionen und/oder Signalkollisionen zu vermeiden.

Bei der Übertragung des Funksignals FUS können ergänzend Signalstärken der Funkübertragung übertragen und mit ausgewertet werden.

Die Ultraschallempfangseinheit UE kann beispielsweise die Signalstärke des jeweils empfangenen Ultraschallsignals ABUS, AUS, AWUS feststellen und bewerten.

Die in der jeweiligen Abstandsbestimmungseinheit A1, A2 gesammelten Daten oder Teile davon können beispielsweise über die Funkeinheit F RF-Schnittstelle (BLE) und/oder über die Datenübertragungsschnittstelle 7 durch andere Endgeräte zum Beispiel Smartphone, RFID-Reader, Gateways, aus der Abstandsbestimmungseinheit A1, A2 ausgelesen werden.

Die jeweilige Abstandsbestimmungseinheit A1, A2 kann beispielsweise in einen permanenten so genannten Advertising-Modus gesetzt werden, wenn bestimmte Daten, insbesondere Sensordaten, zum Beispiel bezüglich des Gesundheitszustands, auftreten. Dies erlaubt umliegenden Empfängern, beispielsweise Smartphones, die Auswertung und die Registrierung eines Alarms.

Die jeweilige Abstandsbestimmungseinheit A1, A2 kann beispielsweise, wie beschrieben, weitere Sensordaten erfassen und auswerten. Dies können beispielsweise Umgebungsparameter wie Gase, Umgebungstemperaturen, Luftfeuchtigkeit sowie Personen-/Objektparameter wie Körpertemperatur, Transpiration, Herzrhythmus sein.

Die Daten aus den verschiedenen Datenspeichern können während der Laufzeit beispielsweise zur Anpassung des Verhaltens der jeweiligen Abstandsbestimmungseinheit A1, A2 genutzt werden oder bei Auswertung zueinander korreliert werden. Zum Beispiel kann abhängig von erfassten Sensordaten die Abstandsbestimmungseinheit A1, A2 ihr Advertising-Verhalten anpassen.

Eine Registrierung von Störsignalen sowohl auf den Ultraschallkanälen als auch auf den Funkkanälen und damit eine Störung der Abstandsbestimmung AB kann beispielweise durch die jeweilige Abstandsbestimmungseinheit A1, A2 in der Speichereinheit 3, insbesondere im zweiten Speicherbereich 3.2, abgespeichert werden und/oder durch die Ausgabeeinheit 4 angezeigt werden.

### BEZUGSZEICHENLISTE

- 1: Vorrichtung zur Abstandsbestimmung
- 2: Mikrocontroller
- 3: Speichereinheit
- 3.1, 3.2, 3.3: Speicherbereich
- 4: Ausgabeeinheit
- 4.1, 4.2, 4.3: Lichtquelle
- 4.4: Tonausgabe
- 5: Echtzeituhreinheit
- 6: Sensoreinheit
- 6.1: Körpersensoreinheit
- 6.2: Beschleunigungssensoreinheit
- 7: Datenübertragungsschnittstelle
- a: Abstand
- A1: erste Abstandsbestimmungseinheit
- A2: zweite Abstandsbestimmungseinheit
- AB: Abstandsbestimmung
- ABUS: Abstandsbestimmungsultraschallsignal
- AUS: Aktivierungsultraschallsignal
- AWUS: Antwortultraschallsignal
- dT: zusätzlicher Zeitabstand
- F: Funkeinheit
- FE: Funkempfangseinheit
- FS: Funksendeeinheit
- FUS: Funksignal
- P1, P2: Person
- U: Ultraschalleinheit
- UE: Ultraschallempfangseinheit
- US: Ultraschallsendeeinheit
- W: Abstandsleiste
- Z: Zeitleiste

## Patentansprüche

1. Verfahren zur Abstandsbestimmung (AB) mittels einer Vorrichtung (1) zur Abstandsbestimmung (AB), umfassend mindestens zwei Abstandsbestimmungseinheiten (A1, A2), wobei die jeweilige Abstandsbestimmungseinheit (A1, A2) umfasst:
- eine Ultraschallsendeeinheit (US) zum Senden vorgegebener Ultraschallsignale (ABUS, AUS, AWUS),
- eine Ultraschallempfangseinheit (UE) zum Empfangen von Ultraschallsignalen (ABUS, AUS, AWUS) weiterer Abstandsbestimmungseinheiten (A2, A1),
- eine Funksendeeinheit (FS) zum Senden vorgegebener Funksignale (FUS),
- eine Funkempfangseinheit (FE) zum Empfangen von Funksignalen (FUS) weiterer Abstandsbestimmungseinheiten (A2, A1),
- einen Mikrocontroller (2) zur Ermittlung eines Abstands (a) zu einer weiteren Abstandsbestimmungseinheit (A2, A1) anhand mindestens eines von dieser weiteren Abstandsbestimmungseinheit (A2, A1) empfangenen Abstandsbestimmungsultraschallsignals (ABUS) und mindestens eines von dieser weiteren Abstandsbestimmungseinheit (A2, A1) empfangenen Funksignals (FUS),
- eine elektrische Energiequelle,
- eine Speichereinheit (3) zur Speicherung einer Identifikation und des ermittelten Abstands (a) der weiteren Abstandsbestimmungseinheit (A2, A1) und/oder eine Ausgabeeinheit (4) zur Ausgabe des ermittelten Abstands (a) und/oder eines mit dem ermittelten Abstand (a) korrespondierenden Ausgabesignals, und
- mindestens eine Sensoreinheit (6), **dadurch gekennzeichnet, daß**
- die mindestens eine Sensoreinheit (6) als eine Sensoreinheit (6) zur Ermittlung einer Lufttemperatur und/oder Luftfeuchte oder als eine Sensoreinheit zur Ermittlung von Gasen oder als eine Körpersensoreinheit (6.1) zur Ermittlung einer Körpertemperatur und/oder Hautleitfähigkeit und/oder des Pulses und/oder anderer Körperparameter einer die Abstandsbestimmungseinheit (A1, A2) tragenden Person (P1, P2) oder als eine Magnetfeldsensoreinheit zur Bestimmung der Himmelsrichtung ausgebildet ist, und
- die Abstandsbestimmungseinheit (A1, A2) ausgebildet ist als eine Plakette zum Anbringen an Kleidung einer Person (P1, P2) oder als ein Aufkleber zum Anbringen an einem Körper einer Person (P1, P2),
wobei eine Abstandsbestimmungseinheit (A1) von mindestens einer weiteren Abstandsbestimmungseinheit (A2) ein Abstandsbestimmungsultraschallsignal (ABUS) und ein Funksignal (FUS) empfängt und daraus einen Abstand (a) zu dieser weiteren Abstandsbestimmungseinheit (A2) ermittelt und den ermittelten Abstand (a) zusammen mit einer Identifikation der weiteren Abstandsbestimmungseinheit (A2) in der Speichereinheit (3) speichert und/oder den ermittelten Abstand (a) und/oder ein mit dem ermittelten Abstand (a) korrespondierendes Ausgabesignal über die Ausgabeeinheit (4) ausgibt, wobei die Abstandsbestimmungseinheit (A1) ein Aktivierungsultraschallsignal (AUS) von der weiteren Abstandsbestimmungseinheit (A2) empfängt, danach die Funkempfangseinheit (FE) aktiviert und danach das Abstandsbestimmungsultraschallsignal (ABUS) und das Funksignal (FUS) empfängt, wobei die Abstandsbestimmungseinheit (A1) nach Empfang des Aktivierungsultraschallsignals (AUS) der weiteren Abstandsbestimmungseinheit (A2) ein Antwortultraschallsignal (AWUS) sendet und die weitere Abstandsbestimmungseinheit (A2) das Antwortultraschallsignal (AWUS) empfängt und daraufhin das Abstandsbestimmungsultraschallsignal (ABUS) und das Funksignal (FUS) sendet, und wobei die weitere Abstandsbestimmungseinheit (A2) ab dem Senden des Abstandsbestimmungsultraschallsignals (ABUS) nacheinander mehrere Funksignale (FUS) sendet, die jeweils als Information ihren zeitlichen Sendeabstand zum Abstandsbestimmungsultraschallsignal (ABUS) enthalten, wobei die Abstandsbestimmungseinheit (A1) aus dem zeitlichen Sendeabstand des nach Empfang des Abstandsbestimmungsultraschallsignals (ABUS) ersten vollständig empfangenen Funksignals (FUS) den Abstand (a) zu dieser weiteren Abstandsbestimmungseinheit (A2) ermittelt.

2. Verfahren nach Anspruch 1,
wobei der Abstand (a) zur weiteren Abstandsbestimmungseinheit (A2) anhand einer Laufzeit des empfangenen
Abstandsbestimmungsultraschallsignals (ABUS) ermittelt wird.

3. Verfahren nach Anspruch 2,
wobei die Laufzeit des empfangenen Abstandsbestimmungsultraschallsignals (ABUS) anhand eines zeitlichen Abstands zwischen dem Empfang des Abstandsbestimmungsultraschallsignals (ABUS) und dem Empfang des Funksignals (FUS) ermittelt wird.

4. Verfahren nach einem der vorhergehenden Ansprüche,
wobei die Identifikation der weiteren Abstandsbestimmungseinheit (A2) mittels des Funksignals (FUS) von der weiteren Abstandsbestimmungseinheit (A2) an die Abstandsbestimmungseinheit (A1) übertragen wird.

5. Verfahren nach einem der vorhergehenden Ansprüche,
wobei die jeweilige Abstandsbestimmungseinheit (A1, A2) eine Zeitgebereinheit umfasst.

6. Verfahren nach einem der vorhergehenden Ansprüche,
wobei die jeweilige Abstandsbestimmungseinheit (A1, A2) eine Echtzeituhreinheit (5) umfasst.

7. Verfahren nach einem der vorhergehenden Ansprüche,
wobei die jeweilige Abstandsbestimmungseinheit (A1, A2) mindestens eine Datenübertragungsschnittstelle (7) umfasst.

## Claims

1. Method for distance determination (AB) by means of a device (1) for distance determination (AB) comprising at least two distance determination units (A1, A2), wherein the respective distance determination unit (A1, A2) comprises:
- an ultrasonic transmitting unit (US) for transmitting predefined ultrasonic signals (ABUS, AUS,
AWUS),
- an ultrasonic receiving unit (UE) for receiving ultrasonic signals (ABUS, AUS, AWUS) from further distance determination units (A2, A1),
- a radio transmitting unit (FS) for transmitting predefined radio signals (FUS),
- a radio receiving unit (FE) for receiving radio signals (FUS) from further distance determination units (A2, A1),
- a microcontroller (2) for determining a distance (a) to a further distance determination unit (A2, A1) based on at least one distance determination ultrasonic signal (ABUS) received from this further distance determination unit (A2, A1) and at least one radio signal (FUS) received from this further distance determination unit (A2, A1),
- an electrical energy source,
- a storage unit (3) for storing an identification and the determined distance (a) of the further distance determination unit (A2, A1) and/or an output unit (4) for outputting the determined distance (a) and/or an output signal corresponding to the determined distance (a), and
- at least one sensor unit (6),
**characterized in that**
- the at least one sensor unit (6) is in the form of a sensor unit (6) for determining an air temperature and/or air humidity or in the form of a sensor unit for determining gases or in the form of a body sensor unit (6.1) for determining a body temperature and/or skin conductivity and/or the pulse and/or other body parameters of a person (P1, P2) carrying the distance determination unit (A1, A2) or in the form of a magnetic field sensor unit for determining the compass direction, and
- the distance determination unit (A1, A2) is in the form of a badge for affixing to clothing of a person (P1, P2) or in the form of a sticker for affixing to a body of a person (P1, P2),
wherein a distance determination unit (A1) receives a distance determination ultrasonic signal (ABUS) and a radio signal (FUS) from at least one further distance determination unit (A2) and uses them to determine a distance (a) to this further distance determination unit (A2) and stores the determined distance (a), together with an identification of the further distance determination unit (A2), in the storage unit (3) and/or outputs the determined distance (a) and/or an output signal corresponding to the determined distance (a) via the output unit (4), wherein the distance determination unit (A1) receives an activation ultrasonic signal (AUS) from the further distance determination unit (A2), then activates the radio receiving unit (FE) and then receives the distance determination ultrasonic signal (ABUS) and the radio signal (FUS), wherein the distance determination unit (A1), after receiving the activation ultrasonic signal (AUS) from the further distance determination unit (A2), transmits a response ultrasonic signal (AWUS) and the further distance determination unit (A2) receives the response ultrasonic signal (AWUS) and then transmits the distance determination ultrasonic signal (ABUS) and the radio signal (FUS), and wherein the further distance determination unit (A2), starting at the time of transmitting the distance determination ultrasonic signal (ABUS), transmits a plurality of radio signals (FUS) in succession, each of which contains as information their temporal transmission distance to the distance determination ultrasonic signal (ABUS), wherein the distance determination unit (A1) determines the distance (a) to this further distance determination unit (A2) from the temporal transmission distance of the first fully received radio signal (FUS) after receiving the distance determination ultrasonic signal (ABUS).

2. Method according to Claim 1,
wherein the distance (a) to the further distance determination unit (A2) is determined by means of a propagation time of the received distance determination ultrasonic signal (ABUS).

3. Method according to Claim 2,
wherein the propagation time of the received distance determination ultrasonic signal (ABUS) is determined by means of a time interval between the reception of the distance determination ultrasonic signal (ABUS) and the reception of the radio signal (FUS).

4. Method according to one of the preceding claims, wherein the identification of the further distance determination unit (A2) is transmitted from the further distance determination unit (A2) to the distance determination unit (A1) by means of the radio signal (FUS).

5. Method according to one of the preceding claims, wherein the respective distance determination unit (A1, A2) comprises a timer unit.

6. Method according to one of the preceding claims, wherein the respective distance determination unit (A1, A2) comprises a real-time clock unit (5).

7. Method according to one of the preceding claims, wherein the respective distance determination unit (A1, A2) comprises at least one data transmission interface (7).

## Revendications

1. Procédé de détermination de distance (AB) au moyen d'un dispositif (1) de détermination de distance (AB), comprenant au moins deux unités (A1, A2) de détermination de distance, chaque unité (A1, A2) de détermination de distance comprenant :
- une unité (US) d'émission d'ultrasons, pour émettre des signaux ultrasonores prédéfinis (ABUS, AUS, AWUS),
- une unité (UE) de réception d'ultrasons, pour recevoir des signaux ultrasonores (ABUS, AUS, AWUS) d'autres unités (A2, A1) de détermination de distance,
- une unité (FS) d'émission radio, pour émettre des signaux radio prédéfinis (FUS),
- une unité (FE) de réception radio, pour recevoir des signaux radio (FUS) d'autres unités (A2, A1) de détermination de distance,
- un microcontrôleur (2), pour déterminer une distance (a) par rapport à une autre unité (A2, A1) de détermination de distance au moyen d'au moins un signal ultrasonique de détermination de distance (ABUS) reçu de cette autre unité (A2, A1) de détermination de distance et d'au moins un signal radio (FUS) reçu de cette autre unité (A2, A1) de détermination de distance,
- une source d'énergie électrique,
- une unité de mémoire (3), pour mémoriser une identification et la distance déterminée (a) de l'autre unité (A2, A1) de détermination de distance et/ou une unité d'émission (4) pour émettre la distance déterminée (a) et/ou un signal d'émission correspondant à la distance déterminée (a), et
- au moins une unité capteur (6),
**caractérisé en ce que**
- ladite au moins une unité capteur (6) est conçue sous la forme d'une unité capteur (6) pour déterminer une température de l'air et/ou une humidité de l'air, ou sous la forme d'une unité capteur pour détecter des gaz, ou sous la forme d'une unité capteur corporel (6.1) pour déterminer une température corporelle et/ou une conductivité cutanée et/ou le pouls et/ou d'autres paramètres corporels d'une personne (P1, P2) portant l'unité (A1, A2) de détermination de distance, ou sous la forme d'une unité capteur de champ magnétique pour déterminer la direction cardinale, et
- l'unité (A1, A2) de détermination de distance est conçue sous la forme d'une plaquette à fixer sur les vêtements d'une personne (P1, P2) ou sous la forme d'un autocollant à fixer sur le corps d'une personne (P1, P2), une unité (A1) de détermination de distance recevant d'au moins une autre unité (A2) de détermination de distance un signal ultrasonore (ABUS) de détermination de distance et un signal radio (FUS), et déterminant à partir de ceux-ci une distance (a) par rapport à cette autre unité (A2) de détermination de distance et enregistrant la distance déterminée (a) conjointement avec une identification de l'autre unité (A2) de détermination de distance dans l'unité de mémoire (3) et/ou transmettant la distance déterminée (a) et/ou un signal d'émission correspondant à la distance déterminée (a), via l'unité d'émission (4), l'unité (A1) de détermination de distance recevant un signal ultrasonore d'activation (AUS) en provenance de l'autre unité (A2) de détermination de distance, puis activant l'unité de réception radio (FE) et recevant ensuite le signal ultrasonore (ABUS) de détermination de distance et le signal radio (FUS), l'unité (A1) de détermination de distance envoyant, après réception du signal ultrasonore d'activation (AUS) provenant de l'autre unité (A2) de détermination de distance, un signal ultrasonore de réponse (AWUS) et l'autre unité (A2) de détermination de distance recevant le signal ultrasonore de réponse (AWUS) et envoyant ensuite le signal ultrasonore (ABUS) de détermination de distance et le signal radio (FUS) ; et l'autre unité (A2) de détermination de distance émettant successivement, à partir de l'émission du signal ultrasonore (ABUS) de détermination de distance, plusieurs signaux radio (FUS) qui contiennent chacun, en tant qu'information, leur intervalle de temps d'émission par rapport au signal ultrasonore (ABUS) de détermination de distance, l'unité (A1) de détermination de distance déterminant la distance (a) par rapport à cette autre unité (A2) de détermination de distance à partir de l'intervalle de temps d'émission du premier signal radio (FUS) complètement reçu après réception du signal ultrasonore (ABUS) de détermination de distance.

2. Procédé selon la revendication 1,
dans lequel la distance (a) par rapport à l'autre unité (A2) de détermination de distance est déterminée au moyen d'un temps de propagation du signal ultrasonore (ABUS) de détermination de distance reçu.

3. Procédé selon la revendication 2,
dans lequel le temps de propagation du signal ultrasonore (ABUS) de détermination de distance reçu est déterminé à partir d'un intervalle de temps entre la réception du signal ultrasonore (ABUS) de détermination de distance et la réception du signal radio (FUS).

4. Procédé selon l'une des revendications précédentes, dans lequel l'identification de l'autre unité (A2) de détermination de distance est transmise à l'unité (A1) de détermination de distance au moyen du signal radio (FUS) provenant de l'autre unité (A2) de détermination de distance.

5. Procédé selon l'une des revendications précédentes, dans lequel l'unité respective (A1, A2) de détermination de distance comprend une unité d'horloge.

6. Procédé selon l'une des revendications précédentes, dans lequel l'unité respective (A1, A2) de détermination de distance comprend une unité d'horloge en temps réel (5).

7. Procédé selon l'une des revendications précédentes, dans lequel l'unité respective (A1, A2) de détermination de distance comprend au moins une interface (7) de transmission de données.
